# EUROPEAN PATENT APPLICATION

(11) **EP 2 672 648 A1**
(43) Date of publication of application: **11.12.2013**
(21) Application number: 12305638.4
(22) Date of filing: 06.06.2012
(51) Int. Cl.: H04L 5/00

(54) **Signaling concept for multi-user detection**

(71) Applicant: Alcatel Lucent, 75007 Paris (FR)
(72) Inventor: Braun, Volker, 70176 Stuttgart (DE); Doetsch, Uwe, 74392 Freudental (DE); Fetscher, Robert, 70469 Stuttgart (DE)
(74) Representative: 2SPL Patentanwälte

(57) **Abstract**

Embodiments relate to a concept for a wireless communication network (100), the concept comprising signaling, to a mobile terminal (130-0) associated to the wireless communication network (100), information (150; 200; 210; 300; 310) indicating that first physical radio resources assigned to the mobile terminal (130-0) for a communication between said mobile terminal (130-0) and the wireless communication network (100) are at least partially overlapping second physical radio resources assigned to at least one further mobile terminal (130-1; 130-2; 130-3) for a communication between the at least one further mobile terminal (130-1; 130-2; 130-3) and the wireless communication network (100).

## Description

Embodiments of the present invention generally relate to wireless communication systems and, more particularly, to signaling concepts which may be employed by wireless communication systems in order to enhance or enable multi-user detection schemes at a receiver.

### Background

Demands for higher data rates and/or better coverage of mobile services are steadily increasing. For this purpose, modem mobile or wireless communication systems, such as 3^{rd} Generation (3G) systems, e.g. like High Speed Packet Access (HSPA), and 4^{th} Generation (4G) systems, e.g. like Long-Term Evolution (LTE), provide enhanced technologies, which may enable higher spectral efficiencies and may allow for higher data rates and cell capacities. As wireless network operators are seeking to extend the coverage and capacity of their wireless communication networks, advanced transmission concepts are one way forward.

Downlink (DL) coordinated transmission may be regarded as one of those advanced transmission concepts. Downlink coordinated transmission has become increasingly relevant to enhance performance, in terms of both spectral efficiency and cell edge throughputs, and comes in a variety of solutions involving single or multiple transmission points, as, for example, Multi-User Multiple Input Multiple Output (MU-MIMO) transmission, Coordinated Multi-Point transmission (CoMP), multiple access solutions based on superposition, for example Interleave Division Multiple Access (IDMA) or Radial Division Multiple Access (RDMA).

When combining the mentioned downlink coordinated transmission techniques with orthogonal multiple access techniques, e.g. like Code Division Multiple Access (CDMA) or Orthogonal Frequency Division Multiple Access (OFDMA), so-called Multiple Access Interference (MAI) may become a serious issue when the same or similar (at least partially overlapping) physical radio resources are assigned to different users of the network, which are still in the vicinity of each other. Multi-User Detection (MUD) or joint detection, however, may be regarded as a potential solution to the MAI problem. Coordinated transmission schemes have in common that knowledge of interfering signals at the receiver may improve performance by applying joined channel estimation for multiple users on user-specific reference symbols in combination with optimum or sub-optimum MUD algorithms on the received data, such as, for example, linear (e.g. Minimum Mean Squared Error = MMSE) or nonlinear (e.g. Successive Interference Cancellation = SIC, or Maximum Likelihood Detection = MLD) processing techniques. That is to say, it is assumed that the respective signals have an at least partially overlapping physical radio resource allocation.

Beside the aforementioned coordinated transmission schemes, also some network coding principles, such as Multi-User Automatic Repeat Request (ARQ) require detection of multiple user signals in a receiver in order to enable the decoding.

In the sequel, the term physical radio resource may be understood as an element or a combination of elements of the group of a frequency resource (e.g. a bandwidth, a carrier, a sub-carrier), a time resource (e.g. a radio frame, a time slot, a symbol, a sub-frame, a Time Transmission Interval (TTI)), a code resource (e.g. a spreading code), an Analog Spectrum Modulation (ASM) symbol, a Digital Spectrum Modulation (DSM) symbol, a Frequency Shift Keying (FSK) symbol, a Phase Shift Keying (PSK) symbol, a Pulse Code Modulation (PCM) symbol, a Quaternary Amplitude Modulation (QAM) symbol, a Frequency Hopping Spectrum (FHSS) sequence, a Direct Sequence Spread Spectrum (DSSS) sequence, etc. A physical radio resource may thus correspond to one of or a combination of the group of time resources, frequency resources, or coding resources for transmission techniques. For example, a Data Radio Bearer (DRB) also comprises a combination of physical radio resources and, hence, may be regarded as a radio resource itself.

### Summary

Embodiments of the present invention provide a signaling concept to enable multi-user detection in case at least partially overlapping physical radio resources have been assigned to different users which are still in the vicinity of each other, such that their mutual interference (i.e. MAI) may not be regarded as negligible. For this purpose, it is one finding of embodiments that a user or the respective mobile terminal, also referred to as User Equipment (UE) according to the 3^{rd} Generation Partnership Project (3GPP) terminology, may be enabled to read physical radio resource allocation information for itself and for a set of (potentially) interfering users or mobile terminals.

According to a first aspect it is provided an apparatus for a wireless communication system or network. The apparatus comprises a signaling entity or a signaler which is operable to signal, to a mobile terminal which is associated to the wireless communication network, information indicating that first physical radio resources assigned to the mobile terminal for a (uni- or bi-directional) communication between said mobile terminal and the wireless communication network are at least partially overlapping second physical radio resources assigned to at least one further mobile terminal for a communication between the at least one further mobile terminal and the wireless communication network. That is to say, some embodiments may provide a downlink (DL) signaling concept allowing a mobile terminal to be informed that there is communication with at least one further mobile terminal potentially causing MAI to said mobile terminal. Further, the mobile terminal may be informed about the commonly assigned physical radio resources. With the aid of such information MUD techniques may be employed to advantage at the mobile terminal, in particular for downlink communication.

The wireless communication network may in general be any present or future wireless communication network. It may, for example, correspond to one of the wireless communication systems standardized by the 3^{rd} Generation Partnership Project (3GPP), as the Global System for Mobile Communications (GSM), Enhanced Data rates for GSM Evolution (EDGE), GSM/EDGE Radio Access Network (GERAN), Universal Terrestrial Radio Access Network (UTRAN) or Evolved UTRAN (E-UTRAN), High Speed Packet Access (HSPA), Long Term Evolution (LTE) or LTE-Advanced (LTE-A), or wireless communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms wireless communication system and mobile communication network may be used synonymously.

In embodiments, the wireless communication system may comprise mobile terminals and base stations. Depending on the scenario, i.e. downlink (DL) or uplink (UL), either one may function as a transmitter or receiver, respectively. For downlink, a base station will take over transmitter functionalities while a mobile terminal takes the receiver part. In the uplink it is vice versa, i.e., a base station works as a receiver while a mobile terminal works as a transmitter. The mobile terminal may correspond to a smartphone, a cell phone, user equipment, a laptop, a notebook, a personal computer, a Personal Digital Assistant (PDA), a Universal Serial Bus (USB) -stick, a car, etc. Thereby a mobile terminal may be equipped with one or a plurality of co- or cross-polarized antennas forming an antenna array of correlated or uncorrelated antenna elements. The usage of multiple antennas (i.e. ≥ 2 antennas) at the mobile terminal may lead to MIMO or SIMO (Single-Input Multiple-Output) channels from a serving base station to the mobile terminal. As mentioned before, a mobile terminal may also be referred to as User Equipment (UE) in line with the 3GPP terminology.

The apparatus for the wireless communication network may be regarded as a network apparatus, i.e., an apparatus installed on the network side. For a coordinated transmission scenario, the apparatus may be a network entity which is coupled to a plurality of transmission points. In some embodiments, different transmission points correspond to different antenna sites, such as different base station sites, for example. Hence, in some embodiments the apparatus may be a base station apparatus, coupled to or comprised by a base station. A base station can be located in the fixed or stationary part of the network or system. A base station may correspond to a remote radio head, a transmission point, an access point, a macro cell, a small cell, a micro cell, a femto cell, a metro cell etc. A base station can be a wireless interface of a wired network, which enables transmission of radio signals to a UE or mobile terminal. Such a radio signal may comply with radio signals as, for example, standardized by 3GPP or, generally, in line with one or more of the above listed systems. Thus, a base station may correspond to a NodeB, an eNodeB, a BTS, an access point, etc. Like a mobile terminal, also a base station may be equipped with one or a plurality of antennas (i.e. ≥ 2 antennas), leading to MIMO communication channels between an associated mobile terminal and its serving base station. In the sequel the terms base station and cell may be used interchangeably.

In some embodiments the signaler may be operable to signal at least a part of the information indicating that the first physical radio resources assigned to the mobile terminal at least partially overlap the second physical radio resources of a further mobile terminal as Radio Resource Control (RRC) signaling information, wherein RRC handles control plane signaling of Layer 3 (L3) between the UEs and the Radio Access Network (RAN). For example, at least a part of the information may be signaled in response to a random access procedure of the mobile terminal. The apparatus may then send a random access response message to the mobile terminal, e.g. on a Downlink Shared Channel (DL-SCH) or Physical Downlink Shared Channel (PDSCH), conveying the information. This message may be indicative of a first mobile terminal identifier, which is associated to the mobile terminal, and of at least one second mobile terminal identifier, which is associated to the at least one further mobile terminal. For example, the information may be indicative of a Cell Radio Network Temporary ID (C-RNTI) of the mobile terminal and/or the at least one further mobile terminal.

According to some embodiments, the first mobile terminal and the at least one second mobile terminal may form a set of interfering (MAI) mobile terminals or C-RNTIs. A C-RNTI of the set, e.g. a set-specific C-RNTI, may then be used for further physical radio resource assignments and/or Downlink Control Information (DCI) delivery for the mobile terminals. That is to say, the first mobile terminal and the at least one further mobile terminal may form a set of mobile terminals (UEs) being scheduled using the same or overlapping physical radio resources. The signaled information from the apparatus may be indicative of the set of mobile terminals and enable the mobile terminal and/or the further mobile terminals of the set to decode set- and or user-specific DCI, which may be conveyed to the mobile terminal(s) by means of a downlink (DL) control channel or a Physical Downlink Control Channel (PDCCH) and/or a Downlink Shared Channel (DL-SCH) or a Physical Downlink Shared Channel (PDSCH), for example. A PDCCH, exclusively carrying control information, may be transmitted on one or an aggregation of several Control Channel Elements (CCEs). A CCE corresponds to nine (radio) resource-element groups (REGs). The number of CCEs used to carry a PDCCH is controlled by the PDCCH format. The PDSCH may be used to transmit the DownLink Shared Channel (DL-SCH). The DL-SCH is the transport channel used for transmitting user-specific downlink data, i.e. useful data, as well as control information embedded therein. The set of mobile terminals may be semi-static according to some embodiments. That is to say, the set of mobile terminals sharing the at least partially overlapping physical radio resources may be reconfigured from time to time, for example, every several ten or hundred milliseconds, depending on the network scheduling.

The DCI may comprise physical radio resource allocation information related to the set of mobile terminals (i.e. the mobile terminals thereof), information on modulation and coding schemes of the mobile terminals comprised by the set, and/or information on Hybrid Automatic Repeat Request (HARQ) processes related to the individual mobile terminals of the set. The physical radio resource allocation information may indicate a position of the radio resources allocated for the respective user in a physical radio resource block domain. The allocation can be based on, for example, a bitmap pointing to given Physical Resource Blocks (PRBs) or an index of the first PRB plus a number of contiguously allocated PRBs. The modulation/coding scheme is related to downlink user data. In embodiments related to LTE, this information may be signaled via a 5 bit value. The 5 bit signaling indicates a modulation order and a Transport Block Size (TBS). Based on these parameters and the number of allocated PRBs, the coding rate may be derived. An HARQ process number may be signaled as the HARQ retransmission from an eNodeB point of view is asynchronous and an exact transmission instant is up to an eNodeB scheduler functionality. Without the process HARQ number a UE could confuse the different processes and combine wrong data. This may also prevent error propagation from this part if control signaling is lost for a single Transmission Time Interval (TTI).

In some embodiments the signaler may be operable to scramble DCI for the set of mobile terminals or a quantity derived from the DCI, such as a Cyclic Redundancy Check (CRC) code, using a group- or set-specific identifier or a quantity derived thereof. A further mobile terminal- or user-specific identifier may be used to identify the DCI belonging to particular mobile terminal of the set. As has been explained before, set-specific and/or user-specific DCI may be signaled to the mobile terminals via PDCCH and/or PDSCH in some embodiments. In some embodiments, set-specific DCI being common to all users or mobile terminals of the set may be signaled via PDCCH, while user-specific DCI related to a particular user or mobile terminal of the set may be signaled via PDSCH.

In some embodiments the signaled set being indicative of the first mobile terminal and the at least one further mobile terminal may be a contiguous or non-contiguous set of mobile terminal identifiers, the set having size *N*. In this case the signaler may be operable to signal a set-specific identifier and the size *N* of the contiguous set to the mobile terminal as part of the information. From this signaled set identifier and the size *N* the individual identifiers (e.g. C-RNTIs) of the at least one further mobile terminal of the set may be derived. It may be assumed that a mobile terminal is assigned its own C-RNTI. The set may contain *N* contiguous C-RNTIs defined by a start value plus number *N*. So by knowing the set and its own C-RNTI the mobile can derive all C-RNTIs of potentially interfering users. Additionally, or alternatively, the signaler may be operable to signal a set- or group-specific identifier for the set (e.g. group C-RNTI) and a user-specific identifier *n* ≤ *N.* The signaling of the set-specific identifier and the user-specific identifier *n* may take place via RRC signaling, for example, before DCI is transmitted. Based on the group C-RNTI and the user-specific number *n*, a user or mobile terminal may derive its user-specific mobile terminal identifier and/or its user-specific Downlink Control Information (DCI) parameters.

The information signaled to the mobile terminal (and to the at least one further mobile terminal) may not only comprise mobile terminal or user identifiers. Additionally or al-tematively part of the signaled information may also be indicative of the first and/or the second physical radio resources. In embodiments related to OFDMA technologies the first and/or second physical radio resources may be resources in the time and/or frequency domain, such as OFDM symbols, sub-frames, TTIs, sub-carriers, or the like. While the first and second radio resources may in some embodiments only partially overlap in time and/or frequency, those physical radio resources may also be identical in other embodiments. That is to say, in such a case, the mobile terminal and the at least one further mobile terminal may be scheduled by the network using exactly the same physical radio resources in time and/or frequency.

In embodiments employing identical first and second physical radio resources for two different users, the signaler may be operable to signal the information on the identically assigned or allocated physical radio resources to only one user (mobile terminal) of the group or set comprising the mobile terminal and the at least one further mobile terminal. This may reduce a signaling overhead required for conveying the DCI from the network to the mobile terminal set.

Additionally, or alternatively, the signaler may also be operable to jointly signal the information on identically or commonly assigned or allocated physical radio resources to every member of the set of mobile terminals, i.e., to the mobile terminal and to the at least one further mobile terminal. In this case, a CRC of the joint or common DCI may be scrambled with a common group- or set-specific identifier for the set of mobile terminals comprising the mobile terminal and the at least one further mobile terminal. Thereby the joint signaling may take place via PDCCH, while user-specific signaling may be done via PDSCH, for example. Hence, according to some embodiments, a common part of the information may be signaled to the mobile terminal via PDCCH, wherein a user-specific part of the information (DCI) may be signaled to the mobile terminal and the at least one further mobile terminal via PDSCH, respectively. This may for example be used to keep a backward compatibility to present or former versions of the LTE standard.

In some embodiments the signaling entity may be operable to signal, along with the information, a user combination indicator for indicating a combination of mobile terminals/users from the group or set comprising the mobile terminal and the at least one further mobile terminal, which are scheduled at the same time on the at least partially overlapping radio resources by the wireless communication network. This may be used to identify mutually interfering (MAI) users in a coordinated transmission or to indicate conventional transmission, for example.

According to a further aspect embodiments also provide a wireless communication network which comprises a scheduler operable to schedule a communication (downlink and/or uplink) of a first user of the wireless communication network on first physical radio resources and to schedule a communication of at least one second user of the wireless communication network on second physical radio resources at least partially overlapping the first physical radio resources. Thereby, the first and the at least one second user may be associated to the same cell (cluster) or to different cells (clusters). That is to say, the different users may be associated to a single or to multiple transmission point(s). Further, the network comprises an apparatus according to embodiments, i.e., a signaling entity operable to signal to the first user information indicating that the first physical radio resources are at least partially overlapping the second physical radio resources of the second user.

Consequently, according to a further aspect it is also provided a mobile terminal apparatus for a wireless communication network. The mobile terminal apparatus comprises a receiver which is operable to receive, from the wireless communication network, information indicating that first physical radio resources assigned to the mobile terminal for a communication between said mobile terminal and the wireless communication network are at least partially overlapping second physical radio resources assigned to at least one further mobile terminal for a communication between the at least one further mobile terminal and the wireless communication network. Further, the mobile terminal apparatus may (optionally) comprise a multi-user detector which is operable to perform a multi-user detection based on the received or signaled information. As has been explained before, the signaled information may be a combination of RRC signaling messages and DCI. Note that the term multi-user detection is not necessarily to be understood as detecting and outputting receive signals of multiple users. Moreover, it is to be understood as a concept of MAI-cancellation, e.g. by estimating signals related to an interfering user and using those estimates for interference cancellation (e.g. by adequate subtraction).

The aforementioned (network) apparatus for the wireless communication network may also perform a method. Accordingly, embodiments of the present invention also provide a method for a wireless communication network, the method comprising a step of signaling, to a mobile terminal/user associated to the wireless communication network, information indicating that first physical radio resources assigned to the mobile terminal/user for a communication between said mobile terminal/user and the wireless communication network are at least partially overlapping second physical radio resources assigned to at least one further mobile terminal/user for a communication between the at least one further mobile terminal/user and the wireless communication network.

In accordance with the aforementioned mobile terminal apparatus, embodiments further provide a method for said mobile terminal apparatus, wherein the method comprises a step of receiving, from the wireless communication network, information indicating that first physical radio resources assigned to the mobile terminal for communication between said mobile terminal and the wireless communication network are at least partially overlapping second physical radio resources assigned to at least one further or other mobile terminal for communication between the at least one further mobile terminal and the wireless communication network. Further, the method may comprise an optional step of performing a multi-user detection based on the received information in order to detect a signal dedicated to the mobile terminal. For example, the multi-user detection may be used to advantage for canceling MAI from the at least one further mobile terminal.

Some embodiments comprise one or more programmable digital control circuit(s) installed within the network apparatus or the mobile terminal apparatus for performing one of the above methods. Such a programmable digital control circuit, for example a Digital Signal Processor (DSP), a Field Programmable Gate Array (FPGA) or a general purpose processor with hardware accelerators, needs to be programmed accordingly. Hence, yet further embodiments also provide a computer program having a program code for performing embodiments of one of the above methods, when the computer program is executed on a programmable hardware device.

Embodiments of the present invention may enable enhanced spectrum efficiency of present and further wireless communication systems by enabling efficient multi-user detection algorithms in connection with downlink coordinated transmission. In particular, embodiments may enable downlink multi-user detection in connection with Multi-User-MIMO and/or CoMP.

### Brief Description of the Figures

Some embodiments of apparatuses and/or methods will be described in the following by way of example only, and with reference to the accompanying Figures, in which
- Fig. 1: schematically illustrates a wireless communication network comprising a plurality of transmission points and associated mobile terminals;
- Fig. 2a: exemplifies a DCI signaling on an LTE downlink control channel, according to an embodiment;
- Fig. 2b: exemplifies downlink control signaling on a downlink shared data channel, according to an embodiment;
- Fig. 3a: exemplifies a further embodiment of DCI signaling on an LTE downlink control channel;
- Fig. 3b: exemplifies a further embodiment of downlink control signaling on a downlink shared data channel; and
- Fig. 4: exemplifies an in-band signaling of appended resource allocations, according to an embodiment.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

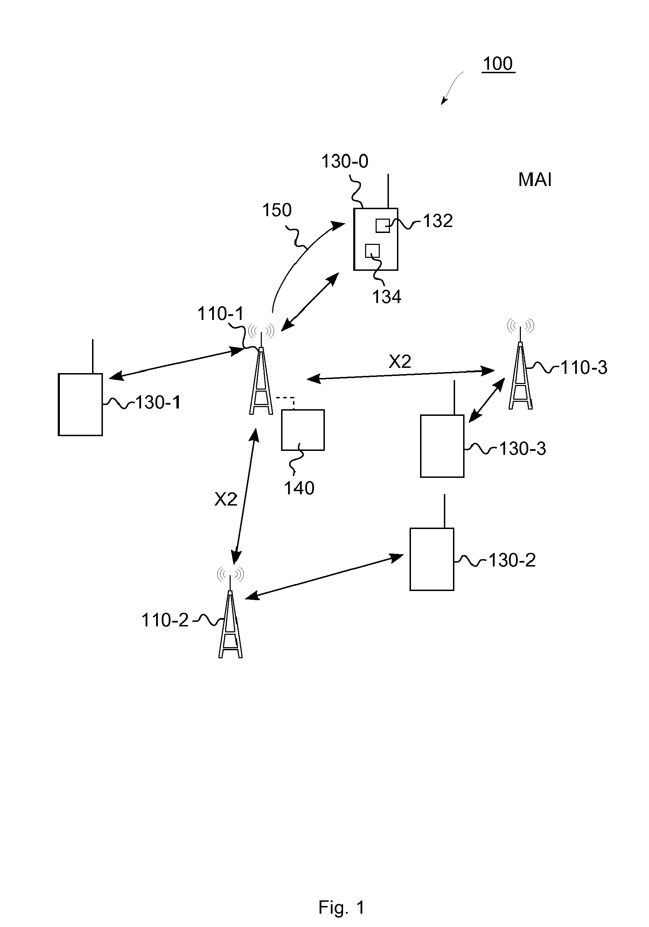

Fig. 1 schematically illustrates the wireless communication network 100, which may be a cellular network, such as a LTE network, for example.

The wireless communication network 100 comprises a plurality of transmission points 110-1, 110-2, and 110-3, which may be base stations or Remote Radio Heads (RRH), for example. The transmission points 110-1, 110-2, and 110-3 may be coupled to each other by means of an inter-transmission-point interface. In embodiments related to LTE, this interface 120 may correspond to the so-called X2 interface. Each of the transmission points 110-1, 110-2, and 110-3 may have associated therewith one or more mobile terminals or UEs 130-0 to 130-3. For downlink communication between the network 100 and the mobile terminals 130-0 to 130-3, coordinated transmission, such as MU-MIMO or CoMP may be employed. For example, the transmission points 110-1 to 110-3 may form a base station cluster for CoMP transmission to the associated mobile terminals 130.

A first mobile terminal 130-0, which is exemplarily associated to a transmission point (e.g. eNodeB) 110-1, is assigned or allocated first physical radio resources for a (downlink) communication between said first mobile terminal 130-0 and the wireless communication network 100 or the transmission points thereof. At least one of the further mobile terminals 130-1 to 130-3 is assigned or allocated second physical radio resources for a (downlink) communication between the at least one further mobile terminal 130-1 to 130-3 and the wireless communication network 100 or the transmission points thereof. Further, the first physical radio resources (e.g. PRBs) associated to the first mobile terminal 130-0 and the second physical radio resources associated to the at least one further mobile terminal 130-1 to 130-3 do at least partially overlap, for example in time and/or frequency direction. That is to say, the first and the second physical radio resources may have some physical radio resources in common.

The network 100 also comprises an apparatus, e.g. a base station apparatus, comprising signaling entity or signaler 140 which is operable or adapted to signal, to the first mobile terminal 130-0, information 150 indicating that the first physical radio resources assigned to the first mobile terminal 130-0 are at least partially overlapping the second physical radio resources assigned to the at least one further mobile terminal 130-1 to 130-3 for communication between the at least one further mobile terminal and the wireless communication network 100. In some embodiments, the signaled information 150 may enable the first mobile terminal or user 130-0 to read a downlink scheduling grant for itself and for a set S' of potentially interfering (MAI) users 130-1 to 130-3.

The mobile terminal 130-0 associated to the wireless communication network 100 consequently comprises a receiver 132 which is operable to receive, from the wireless communication network 100, the signaled information 150. Optionally, the mobile terminal 130-0 may also comprise a multi-user detector 134 operable to perform a multi-user detection or MAI-cancelation based on the received information 150.

According to embodiments, the first mobile terminal 130-0 and the at least one further mobile terminal 130-1 to 130-3 may form a semi-static set S of mutually interfering (due to MAI) mobile terminals. The signaled information 150 may on the one hand be indicative of the set S of mobile terminals and may, on the other hand, enable any mobile terminal of the set S to decode set- and/or user-specific DCI, possibly comprising set-and/or user-specific radio resource allocation information, set- and/or user-specific information on modulation encoding scheme, set- and/or user-specific information on HARQ process, etc.. For this purpose, a part of the signaled information 150 may comprise or be indicative of a first identifier, which is associated to the mobile terminal 130-0, and of at least one second identifier, which is associated to the at least one further mobile terminal 130-1 to 130-3. In embodiments, the identifiers associated to the mobile terminals 130-0 to 130-3 may be C-RNTIs or other numbers signaled to the respective mobile terminals via RRC signaling messages, for example. In other words, the signaled information 150 may be indicative of the set S of mobile terminals 130-0, 130-1, 130-2, 130-3 and enable the mobile terminal 130-0 to decode or descramble downlink control information related to the set of mobile terminals 130-0, 130-1, 130-2, and 130-3.

According to an embodiment the user or mobile terminal 130-0 may receive one or more different user-specific identifiers (e.g. C-RNTIs) being indicative of the set S of mobile terminals 130-0 to 130-3 via RRC signaling, wherein the set S may comprise the mobile terminal's 130-0 own user identifier and a set S' of other user identifiers related to the (potentially interfering) mobile terminals 130-1 to 130-3. Scheduling by the wireless communication network 100 may preferably be done such that potential interference for user 130-0 is caused by the users or mobile terminals 130-1 to 130-3 of set S'.

For reading DCI the user 130-0 may perform blind decoding on a Downlink Control Channel (e.g. PDCCH) and descramble set- and/or user-specific Cyclic Redundancy Checks (CRC) based on its own user identifier and the other user identifiers of set S', e.g. in each sub-frame. In LTE, for example, a UE needs to check all possible PDCCH locations, PDCCH formats and DCI formats, and act on the messages with correct CRCs taking into account that the CRC is scrambled with a set- and/or UE-specific identity. A set of CCE locations in which a mobile terminal may find its PDCCHs may be considered as a search space. In LTE, the search space has a different size for each PDCCH format. Moreover, separate UE-specific and common search spaces may be defined; a UE-specific search space is configured for each UE individually, whereas all UEs are aware of the extent of the common search space. The process of blind decoding of the PDCCH is well-known in the art and will thus not further be explained in further detail.

In some embodiments the signaler 140 may hence be operable or adapted to scramble set-specific, i.e. common, DCI and/or a CRC derived thereof with the respective set-specific group C-RNTI or a quantity derived thereof. Additionally, the signaler 140 may be operable to scramble user-specific, i.e. individual, DCI and/or a CRC derived thereof for a mobile terminal 130-0 to 130-3 of the set using a user-specific identifier, e.g. a user-specific C-RNTI. However, all common and individual DCI parameters of currently interfering users may be mutually "visible" to each other, such that the DCI may be taken into account for multi-user detection concepts.

In an embodiment the set S of identifiers may be contiguous and be defined by a start value, e.g. a start C-RNTI, and a size *N* of set S in order to reduce the required signaling effort. That is to say, the mobile terminal identifiers of mobile terminals 130-0 to 130-3 may form a contiguous set S of size *N*, wherein the signaler 140 may be operable to signal a set-specific identifier (start value) and the size N of the contiguous set S to the mobile terminal 130-0 (and the other terminals 130-1 to 130-3). Also, each of the mobile terminals 130-0 to 130-3 has a priori knowledge of its user-specific identifier (e.g. via RRC signaling), which may e.g. be start C-RNTI + 0, start C-RNTI + 1, start C-RNTI + 2, etc., for example. In such an embodiment, the DCI CRC may be scrambled with user-specific C-RNTI for each of the mobile terminals 130-0 to 130-3. In order to search for DCIs concerning the set S, a mobile terminal 130-0 to 130-3 may therefore apply scrambling on DCI CRC for the start C-RNTI, the start C-RNTI + 1, the start C-RNTI + 2, ..., and the start CRNTI + N - 1. Alternatively, this may be interpreted in the way that DCI CRC on downlink control channel may be scrambled twice, i.e., once with the start CRNTI and then with a user-specific identifier associated with number *n* = 0, 1, 2 ..., *N*-1. The latter identifier may e.g. be derived from padding an adequate number of bits of *n* with zeros. If set S is contiguous, then a user-specific C-RNTI may be regarded as start C-RNTI + *n*. When interpreting this as a binary number, start C-RNTI may comprise e.g. a 16bit field, and *n* may comprise e.g. 2 bits. In order to add *n* to start CRNTI, *n* needs be expanded to 16bit. The addition of the expanded *n* can be interpreted as a second scrambling of the CRC, first with start C-RNTI then with *n*.

A computational complexity for the detection of the downlink (DL) control channel according to embodiments depends on the search spaces used. For example, if all users of the mobile terminal set S have an identical search space, a worst case number of blind decodings on the DL control channel per sub-frame may not be increased as compared to the LTE baseline, while the average number is increased. If the users 130-0 to 130-3 of set S have different search spaces, this may also increase the worst case number of blind decodings per sub-frame by up to *N* times. In either case, the worst case number of user-specific CRC checks per subframe is increased *N* times, where *N* denotes the size of set S.

Embodiments allow for a dynamic switching on sub-frame basis between conventional transmission, i.e. radio resources are allocated to a user without significant MAI by other users (in the same cell), and coordinated transmission in multiple ways: According to a first embodiment a user or mobile terminal may detect whether coordinated transmission is used in a sub-frame in that downlink grants, i.e. DCI, for multiple users are found with overlapping resource allocations. Otherwise, conventional transmission may be applied. Additionally or alternatively, the DCI on the DL control channel may carry a dedicated indicator for coordinated and/or conventional transmission. For example, an extra bit may be used. Another possibility would be to indicate coordinated or conventional transmission by employing unused DCI combinations. Additionally or alternatively, a DCI on the downlink control channel may explicitly include a user combination indicator in order to identify currently interfering users or mobile terminals in a coordinated transmission or to indicate conventional transmission. That is to say, the signaling entity 140 may be operable to signal, along with the information 150, a user combination indicator indicating a combination of mobile terminals from the set S (comprising the mobile terminal 130-0 and the at least one further mobile terminal 130-1 to 130-3), which are scheduled at the same time by the wireless communication network 100 and thus lead to MAI. In particular the latter options may help to reduce computational complexity, for example in case of different search spaces for the users of set S, however, at the expense of some signaling overheads. In any case, the information 150 may indicate that first physical radio resources assigned to the mobile terminal 130-0 are at least partially overlapping second physical radio resources assigned to at least one further mobile terminal 130-1 to 130-3 and, hence, cause MAI. Based on this information 150 the mobile terminal 130-0 may then possibly employ multi-user detection.

The user or mobile terminal set S may in principle also be partitioned into a number of sub-sets S1, S2, ..., wherein each sub-set may implicitly be tagged to a certain physical resource, for example, tagged to a certain sub-band of physical radio resource allocation.

This may lead to a reduction of the average computational complexity at the expense of scheduling constraints.

According to further embodiments, a user group or set S may be defined as the set including the user 130-0 and the potentially interfering users of set S', i.e., users or mobile terminals 130-1 to 130-3. The set S may be identified by a user group identifier, e.g. a group- or set-specific C-RNTI, which is assigned to the set S. The individual users or mobile terminals within the user group may be numbered by *n* = 0 ... *N*-1 (e.g. *N* being a natural number). That is to say, an identifier of the mobile terminal 130-0 and the identifiers of the further mobile terminals 130-1 to 130-3 may form a set S of mobile terminal identifiers of size N. To each mobile terminal or user of set S, the user group identifier and the dedicated number n may be signaled via RRC signaling, for example. Hence, the signaler 140 may be operable to signal the group identifier for the set S, e.g. the group C-RNTI, and user-specific identifier *n* ≤ *N* being indicative of the mobile terminal 130-0 (e.g. *n* = 0) as part of the information 150. That is to say, the signaled information 150 may be indicative of the set S of mobile terminals 130-0, 130-1, 130-2, and 130-3, and enable the mobile terminal 130-0 to decode DCI related to the set S of mobile terminals. In embodiments the size *N* of set S may be predefined (in the example of Fig. 1: *N* = 4) or be signaled to the respective users 130-0 to 130-3 via RRC signaling. The user group identifier may be used for scrambling DCI CRC on the downlink control channel, wherein the DCI may be conveyed to the individual users 130-0 to 130-3 via PDCCH and/or PDSCH, as will be explained in further detail below. Additionally, signaler 140 may be operable to signal (e.g. via RRC signaling) a mapping rule between *n* and another user-specific identifier, e.g. a user-specific C-RNTI, to each of the mobile terminals 130 in order to enable a mobile terminal to handle user-specific data, e.g. for multi-user detection. This may be required if the user-specific data is processed in a user-specific manner, e.g. by a user-specific scrambling on the physical downlink shared channel PDSCH.

For example, the user-specific identifier *n* may explicitly be included in the payload of the downlink scheduling grant conveying the DCI. In this case a user may perform blind decodings on the DL control channel, perform user-group- or set-specific CRC descrambling, i.e., descrambling based on the user group identifier, and read the number *n* in the payload of the downlink scheduling grant for the user set S. Having read its user-specific identifier *n*, the user is able to read its user-specific DCI, i.e. user-specific resource block allocation information, its user-specific modulation encoding scheme used for downlink user data, its user-specific HARQ process number, etc.

Additionally or alternatively, the user-specific identifier *n* may also be implicitly signaled, for example, tagged to a control channel index For example, an interfering user with *n* = 2 may receive a scheduling grant on control channel index number 2, etc. This may be understood as implicitly conveying the user number by using user-specific control channel resources. That is to say, a user with *n* = 2 may receive its scheduling grant on different control channel resources (channel index 2) than a user with *n* = 3 (channel index 3), such that the used control channel resource implicitly indicate the user. Additionally or alternatively *n* may as well be understood as a user combination indicator. The user combination indicator may be implicitly signaled e.g. by the choice of certain control channel resources. These resources could be identified by a control channel index. Implicit signaling of user-specific *n* could also be accomplished by ordering the information elements *n* = 0, 1, 2 ..., *N*-1.

According to some embodiments, the coordinated downlink scheduling of the mobile terminals 130-0 to 130-3 by the network 100 may be constrained such that the user 130-0 under consideration and the members of the interfering sub-set S', i.e. the users 130-1 to 130-3, have an identical radio resource allocation. In such a case the common physical radio resource assignment or allocation may be signaled from the signaler 140 to the associated mobile terminals 130 of the set S only once, whereas other transmission parameters such as modulation/coding scheme, etc., may to be signaled separately for each user of set S. That is to say, in case the first and the second physical radio resources are identical, the signaler 140 may be operable to jointly signal the information 150 on the identically assigned physical radio resources to the members of set S, i.e. the mobile terminal 130-0 and the at least one further mobile terminal 130-1 to 130-3. In some embodiments a downlink grant for one user of set S may include the common resource allocation and his user-specific modulation/coding scheme, etc. Downlink grants to other users of set S may comprise user-specific modulation/coding schemes, etc., but no physical radio resource allocation information. Hence, the signaler 140 may be operable to signal the information 150 on commonly assigned physical radio resources to only one of the set S comprising the mobile terminal 130-0 and the at least one further mobile terminal 130-1, 130-2, and 130-3. The user-specific downlink grants may be transmitted from the network 100 to the users 130 via the downlink control channel (PDCCH). Here, the DCI CRCs may be scrambled in a user-specific manner. Nonetheless, as every member of set S knows the mobile terminal or user identifiers of the other members, every member may access all relevant DCI for multi-user detection.

According to some embodiments a joint downlink grant may be signaled on the DL control channel for all users of set S, wherein the joint downlink grant may comprise the common radio resource allocation. That is to say, the signaler 140 may be operable to jointly signal information 150 on commonly assigned physical radio resources to all of set S comprising the mobile terminal 130-0 and the at least one further mobile terminal 130-1, 130-2, 130-3. Additionally, the joint downlink grant may comprise up to *N* modulation/coding schemes, HARQ process numbers, etc. Typically, the DCI CRC may be scrambled in a user-group- or set-specific manner. For example, the DCI size of the signaled information 150 may be dynamic by including a user combination indicator indicating a sub-set of actively scheduled users. That is to say, the signaler 140 may be operable to signal, along with the information 150, a multiuser combination indicator indicating a combination of mobile terminals from the group (i.e. set S) of the mobile terminal 130-0 and the at least one further mobile terminal 130-1, 130-2, 130-3, which are scheduled at the same time by the wireless communication network 100.

In some embodiments the downlink grant comprised by information 150 and conveyed via a DL control channel may include the common resource allocation for the users of set S and possibly modulation/coding, etc., for one of the users 130-0 to 130-3 of set S. Modulation/coding, etc., for the remaining users of set S may be signaled by means of in-band signaling, e.g. on Shared Data Channel resources (PDSCH). Such embodiments may enable a backward compatibility to former versions of the LTE standard. The CRC on the DL control channel may be scrambled in a user-group-specific manner, e.g. by means of the user group identifier or user group C-RNTI. The downlink grant on the downlink control channel may possibly also include information on the formatting of the in-band signaling part such as modulation/coding scheme or size of set S, etc.

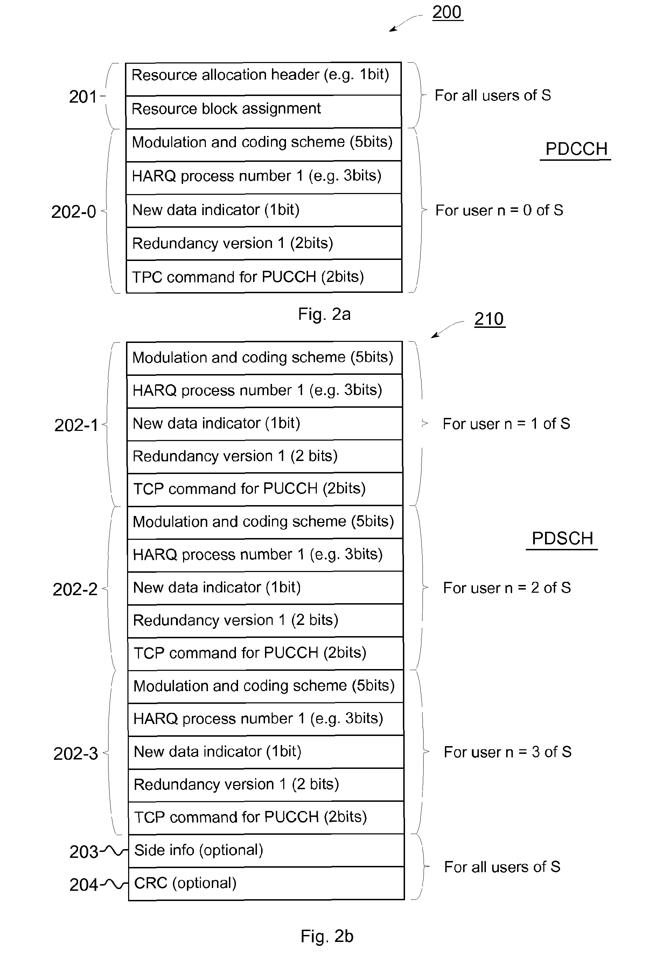

Figs. 2a and 2b illustrate an embodiment comprising a conventional downlink grant 200 for one user of set S, the downlink grant 200 comprising a physical radio resource allocation 201 common to all users of set S. Further, DCI of the further users of set S may be conveyed to the further users by means of in-band signaling on DL Shared Channel (DL-SCH) resources (PDSCH).

Fig. 2a illustrates the downlink grant 200 (comprised by the information 150) for one user of the user set S. The downlink grant 200 may be signaled to the user via DL control channel resources (e.g. PDCCH). Here, only for explanatory reasons the downlink grant 200 is dedicated to user *n* = 0 (mobile terminal 130-0) of set S. As may be seen from Fig. 2a, the downlink grant 200 comprises a physical radio resource block assignment information 201 which indicates commonly assigned physical radio resources for all users of set S. Further, the downlink grant 200 comprises further DCI 202-0 for user *n* = 0 of set S. The resource block allocation information 201 may indicate the position of the common radio resources allocated to all users of set S in the resource block domain. The allocation can be based on, for example, a bitmap pointing the given PRBs or an index of the first PRB and the number of contiguously allocated PRBs. The modulation/coding scheme of the further DCI 202-0 indicates the modulation order and the transport block size. Based on these parameters and the number of allocated resource blocks, the coding rate may be derived for said user *n* = 0. The HARQ process number (e.g. 3 bits) of the further DCI 202-0 may be signaled as the HARQ retransmission from an eNodeB point of view is asynchronous and the exact transmission instant is up to the eNodeB scheduler functionality. Without the process number a UE of user *n* = 0 could confuse the different processes and combine the wrong data. A new data indicator of the further DCI 202-0 may indicate whether a transmission for the particular process is a retransmission or not. The redundancy version is an HARQ parameter that can be used with incremental redundancy to tell which retransmission version is used. A Transmit Power Control (TPC) command for the Physical Uplink Control Channel (PUCCH) may also be included in the further DCI 202-0. The TPC command may have 2 bits and it can thus use two steps upwards and downwards to adjust the power. Note that the sketched downlink grant 200 only exemplifies the principles of embodiments. For example, when MIMO operation is involved, there may be MIMO-specific signaling elements, which are not shown in Figs. 2a and/or 2b.

Fig. 2b exemplifies an additional in-band signaling payload 210 (also comprised by the information 150) comprising scheduling parameters for the remaining users *n* = 1, *n* = 2, and *n* = 3 of set S (mobile terminal 130-1 to 130-3). As may be seen, the in-band signaling payload 210, which may be signaled via PDSCH, for example, comprises user-specific DCI information elements 202-1 to 202-3 related to users *n* = 1, *n* = 2, and *n* = 3, which resemble element 202-0. Optionally, the in-band signaling payload 210 may also comprise further side information 203 for all users (or possibly also for user *n* = 0). Also, the in-band signaling packet 210 may include an optional user-group-specific CRC 204.

In addition to the exemplary information elements 200, 210, exemplarily shown in Figs. 2a, 2b for DCI format 1 of LTE, also other parameters may be signaled for the members of group or set S, such as a Pre-Coding Matrix Indicator (PMI), which may be applied for a downlink transmission, a transmit power, which may be applied for a downlink transmission, parameters to derive user-specific pilot sequences, e.g. root and shift value of Zadoff-Chu sequence (if not implicitly defined by the standard, e.g. as a function of cell and user identifiers), or resource allocations of the users, which allow more flexible resource allocation of the users (except for legacy user *n* = 0).

For the in-band DCI signaling part 210 actual transmission parameters, such as modulation/coding scheme, resource allocation and size may be predefined, configured via RRC signaling or be implicitly defined, for example by using the same modulation/coding scheme as for DCI 202-0 on DL control channel.

The DCI information format 200, 210 explained referring to Figs. 2a and 2b has a backward compatibility advantage in that a legacy UE may be included in the user set S by numbering it with *n* = 0, for example.

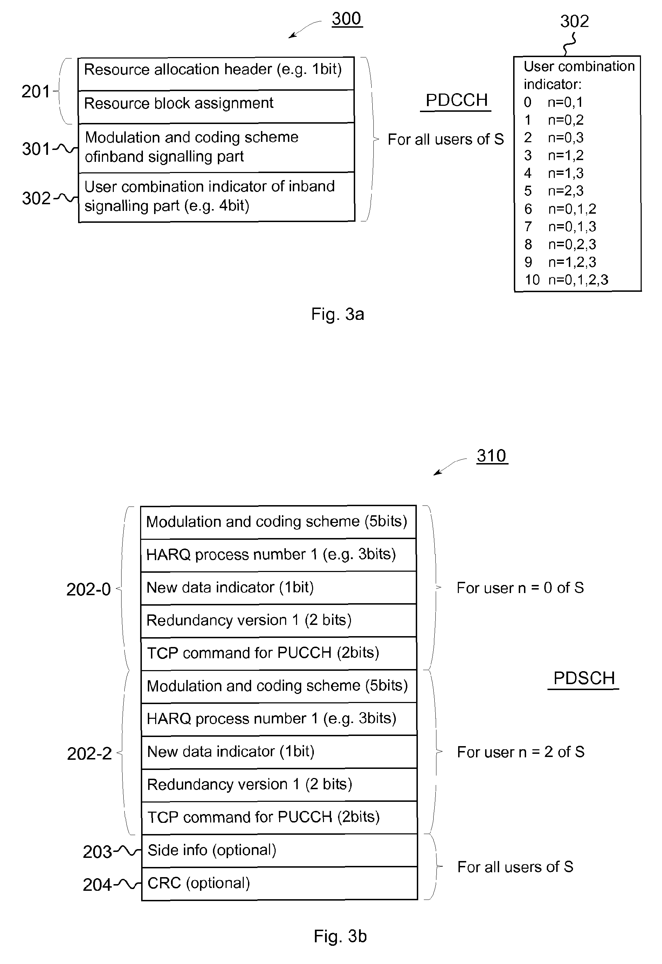

Figs. 3a and 3b both illustrate a further embodiment of conveying DCI comprised by the information 150 from the network 100 to the users 130-0 to 130-3 of the user group S.

Fig. 3a exemplifies a DCI part 300, which is valid for all users of set S and may jointly be signaled to the users 130-0 to 130-3 via PDCCH, for example. Again, the common DCI part 300 comprises resource block allocation information 201 which is common to all users of set S. Further, the common DCI part 300 may comprise information 301 about an in-band signaling part 310 (see Fig. 3b) such as the modulation/coding scheme and/or the size of the in-band signaling part 310, which may be defined by the number *N* of users or by a user combination indicator 302 as exemplified on the right-hand side of Fig. 3a. The user combination indicator 302 may indicate a combination of users from the user group or set S, which are scheduled by the network 100 at the same time (using identical physical radio resources). Assuming set S has size *N* = 4, the user combination indicator may require 4 bits to indicate all possible user combinations. Optionally, the DCI part 300 could further comprise information dedicated to some of the users 130-0 to 130-3, for example modulation/coding scheme, etc., in particular if the DCI part 300 has unused bits left.

Fig. 3b exemplifies in-band signaling payload 310 comprising scheduling parameters 202-0, 202-2, for currently actively scheduled users *n* = 0 and *n* = 2 of set S. As an example only, here it is assumed a user combination indicator of 1 from 302, such that only users *n* = 0 and *n* = 2 receive scheduling parameters 202-0 and 202-2 via PDSCH in-band signaling with possibly predefined ordering. Again, also optional further information 203 and 204 applicable to all (active) users may be included in the in-band signaling part 310. According to further embodiments, also dedicated resource allocations of the users may be included to allow more flexible resource allocations.

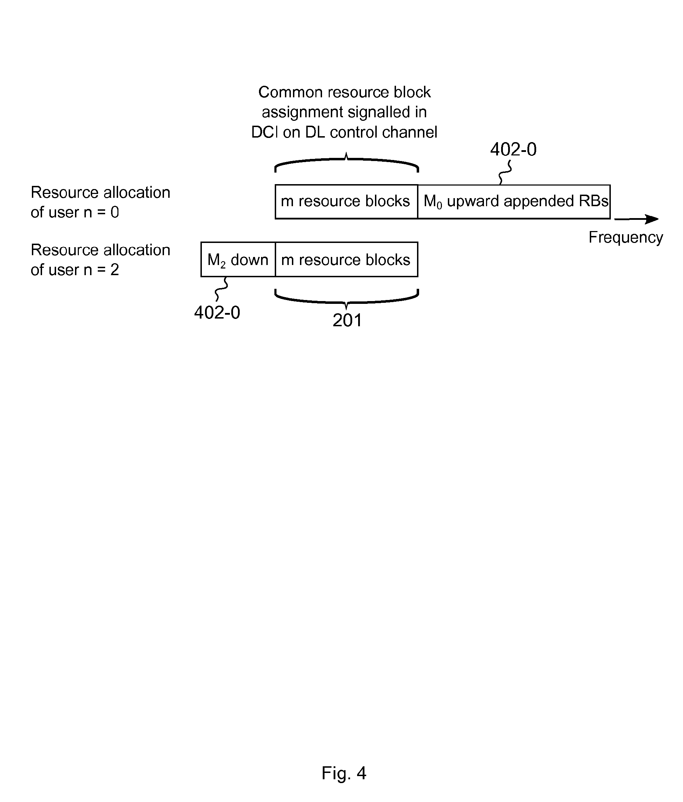

This is exemplified by Fig. 4.

For example, the common resource block allocation information 201 signaled via Downlink Control Channel (PDCCH) may indicate *m* commonly-used resource blocks for all users of set S. The DCI information 202-0 may additionally comprise resource block allocation information on M₀ upwardly appended resource blocks 402-0 also allocated to user *n* = 0. Likewise, the DCI information 202-2 may additionally comprise radio resource block allocation information 402-2 indicating M₂ downwardly appended resource blocks assigned to user *n* = 2 in addition to the *m* commonly-assigned resource blocks. That is to say, user *n* = 0 may have assigned *m*+M₀ first radio resource blocks, while user *n* = 2 may have assigned thereto *m*+M₂ second resource blocks. *m* common resource blocks of the first and second physical radio resource blocks are overlapping each other, i.e. are identical. For example, with additional contiguous resource assignments (in addition to the *m* commonly-assigned resource blocks) a user-specific number *M* of resource blocks to be appended and a user-specific direction bit *D*, indicating up/down in frequency, may also efficiently be signaled.

Embodiments following the principle of Figs. 3a to 4 may be applicable if backward compatibility to former LTE versions may be ignored. Some advantages are a small DCI signaling size on the DL control channel and that the in-band signaling part 310 may have a dynamic modulation/coding scheme and size.

With embodiments making use of user group or set identifiers comprised by the information 150, dynamic switching on sub-frame or TTI basis between "conventional" and coordinated transmission may be supported in that a user performs CRC checks after PDCCH blind decodings, both with its user-specific identifier and its user-group-specific identifier. The former may indicate conventional DL transmission, while the latter may indicate coordinated DL transmission.

In embodiments the users of set S may be served from one or multiple transmission points 110, within one or multiple cells of the network 100. It may be assumed that C-RNTIs for coordinated transmission are coordinated within a respective cluster of transmission points. That is to say, a common set of C-RNTIs may be used across one transmission point cluster. In case the multiple transmission points 110 are extending across multiple cells a UE may be able to detect a DL control channel on multiple cells, respectively. Also, the UE may be informed about the set of cells on which to do DL control channel detection. For example, a UE may receive a number of relevant cell IDs. This may, e.g., be done by means on RRC signaling. As has been explained before, a UE may log into a cell by an uplink random access procedure and, in response thereto, receive an identifier (e.g. C-RNTI) which enables the UE to search for DCI related to said cell. That is to say, the mobile terminal 130-0 may be associated to a first radio cell of the wireless communication network 100 (in the sense that it will receive its own downlink control information 150 in this first cell) and the at least one further mobile terminal 130-1, 130-2, 130-3 may be associated to a second cell of the wireless communication network 100. The signaled information 150 may comprise information enabling the mobile terminal 130-0 to read downlink control information of the second cell, thus of the at least one further mobile terminal 130-1, 130-2, 130-3. That is to say, the mobile terminal 130-0 first searches in its first (serving) cell where it receives its dedicated DCI. Once its DCI is found the mobile terminal 130-0 may start searching for DCIs of interfering users 130-1, 130-2, 130-3 in the second cell. Thereby an average processing overhead for the detection of multiple DL control channels of the different cells (i.e. blind decodings) may be reduced, e.g., by constraining the search space in non-serving cells, either implicitly (e.g. use only same DCI format and/or aggregation level and/or control channel index as used by DL grant in serving cell) or by means of RRC signaling (e.g. define a common DCI and/or aggregation level for set S, or define DCI and/or aggregation level per user of S or S'). Here, a serving cell is to be understood as a cell which handles all (UL and DL) control signaling for the user. Similar search space constraints on DCI format and/or aggregation level may be used for a single cell case.

It will be apparent for the person skilled in the art that the wireless communication network 100 or the signaler 140 thereof are adapted to perform a corresponding method comprising a step of signaling, to the mobile terminal 130-0, the information 150 indicating that first physical radio resources assigned to the mobile terminal 130-0 are at least partially overlapping second physical radio resources assigned to at least one other mobile terminal or user 130-1 to 130-3.

Also, it will be apparent that the mobile terminal 130-0 is adapted to perform a method comprising a step of receiving, from the wireless communication network 100 or the signaling entity 140 thereof, the information 150 indicating that first physical radio resources assigned to the mobile terminal 130-0 are at least partially overlapping second physical radio resources assigned to at least one other mobile terminal or user 130-1 to 130-3. Further, the method may comprise a step of performing a multi-user detection based on the received information 150, which may be indicative of the first and/or the second physical radio resources.

As has been explained before, a common part 201 of the information 150 may be signaled to the mobile terminal 130-0 and the at least one further mobile terminal 130-1 to 130-3 of the set S via a Physical Downlink Control Channel (PDCCH), and wherein a user-specific part 210, 310 of the information 150 may be signaled to the mobile terminal 130-0 and the at least one further mobile terminal 130-1 to 130-3 via a Physical Downlink Shared Channel (PDSCH).

Although embodiments of the present invention have been explained referring to a wireless communication network based on LTE, the principles of the present invention may obviously be employed to other wireless communication networks. Embodiments may enable enhanced spectrum efficiency of present and future wireless communication networks by enabling efficient detection algorithms, such as multi-user detection, with downlink coordinated transmission, such as MU-MIMO and CoMP.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus for a wireless communication network (100), the apparatus comprising:
a signaler (140) operable to signal, to a mobile terminal (130-0) associated to the wireless communication network (100), information (150; 200; 210; 300; 310) indicating that first physical radio resources assigned to the mobile terminal (130-0) for a communication between said mobile terminal (130-0) and the wireless communication network (100) are at least partially overlapping second physical radio resources assigned to at least one further mobile terminal (130-1; 130-2; 130-3) for a communication between the at least one further mobile terminal (130-1; 130-2; 130-3) and the wireless communication network (100).

2. The apparatus according to claim 1, wherein the mobile terminal (130-0) and the at least one further mobile terminal (130-1; 130-2; 130-3) form a set (S) of mobile terminals, and wherein the signaled information (150; 200; 210; 300; 310) is indicative of the set (S) of mobile terminals (130-0; 130-1; 130-2; 130-3) and enables the mobile terminal (130-0) to decode downlink control information (200; 210; 300; 310) related to the set of mobile terminals (130-0; 130-1; 130-2; 130-3).

3. The apparatus according to claim 1, wherein the signaled information (150; 200; 210; 300; 310) is indicative of a first identifier, which is associated to the mobile terminal (130-0), and of at least one second identifier, which is associated to the at least one further mobile terminal (130-1; 130-2; 130-3).

4. The apparatus according to claim 1, wherein the mobile terminal (130-0) and the at least one further mobile terminal (130-1; 130-2; 130-3) form a set (S) of mobile terminals, wherein the signaler (140) is operable to signal a set-specific identifier of the set of mobile terminals (130-0; 130-1; 130-2; 130-3) and a user-specific identifier of the mobile terminal (130-0) as a part of the information (150).

5. The apparatus according to claim 4, wherein the signaler (140) is operable to scramble physical downlink control information for the set and or a Cyclic Redundancy Check derived thereof by means of the set-specific identifier.

6. The apparatus according to claim 1, wherein the information (150; 200; 300) is indicative of the first and/or the second first physical radio resources.

7. The apparatus according to claim 1, wherein the signaler (140) is operable to signal the information on commonly assigned physical radio resources to only one of the mobile terminal (130-0) and the at least one further mobile terminal (130-1; 130-2; 130-3).

8. The apparatus according to claim 1, wherein the signaler (140) is operable to jointly signal information (150; 200; 300) on commonly assigned physical radio resources to all of the mobile terminal (130-0) and the at least one further mobile terminal (130-1; 130-2; 130-3).

9. The apparatus according to claim 1, wherein the signaler (140) is operable to signal a common part (200; 300) of the information (150) to the mobile terminal (130-0) and to the at least one further mobile terminal (130-1; 130-2; 130-3) via a downlink control channel, and wherein the signaler (140) is operable to signal a user-specific part (210; 310) of the information (150) to the mobile terminal (130-0) and/or to the at least one further mobile terminal (130-1; 130-2; 130-3) via a downlink shared channel.

10. The apparatus according to claim 1, wherein the signaler (140) is operable to signal, along with the information (150; 200; 210; 300; 310), a user combination indicator (302) indicating a combination of mobile terminals from the group of the mobile terminal (130-0) and the at least one further mobile terminal (130-1; 130-2; 130-3), which are scheduled at the same time by the wireless communication network (100).

11. The apparatus according to claim 1, wherein the mobile terminal (130-0) is associated to a first cell of the wireless communication network (100) and the at least one further mobile terminal (130-1; 130-2; 130-3) is associated to a second cell of the wireless communication network (100), and wherein the signaled information (150) comprises information enabling the mobile terminal (130-0) to read downlink control information of the second cell.

12. A mobile terminal apparatus (130) of a wireless communication network (100), the mobile terminal apparatus comprising:
a receiver (132) operable to receive, from the wireless communication network (100), information (150; 200; 210; 300; 310) indicating that first physical radio resources assigned to the mobile terminal (130) for a communication between said mobile terminal (130) and the wireless communication network (100) are at least partially overlapping second physical radio resources assigned to at least one further mobile terminal for a communication between the at least one further mobile terminal and the wireless communication network; and
a multiuser detector (134) operable to perform a multiuser detection based on the received information (150; 200; 210; 300; 310).

13. A method for a wireless communication network (100), the method comprising:
signaling, to a mobile terminal (130-0) associated to the wireless communication network (100), information (150; 200; 210; 300; 310) indicating that first physical radio resources assigned to the mobile terminal (130-0) for a communication between said mobile terminal (130-0) and the wireless communication network (100) are at least partially overlapping second physical radio resources assigned to at least one further mobile terminal (130-1; 130-2; 130-3) for a communication between the at least one further mobile terminal (130-1; 130-2; 130-3) and the wireless communication network (100).

14. A method for a mobile terminal apparatus (130) of a wireless communication network (100), the method comprising:
receiving, from the wireless communication network (100), information (150; 200; 210; 300; 310) indicating that first physical radio resources assigned to the mobile terminal (130) for a communication between said mobile terminal (130) and the wireless communication network (100) are at least partially overlapping second physical radio resources assigned to at least one further mobile terminal for a communication between the at least one further mobile terminal and the wireless communication network; and
performing a multiuser detection based on the received information (150; 200; 210; 300; 310).

15. Computer program having a program code for performing the method of claim 13 or 14, when the computer program is executed on a programmable hardware device.

## Amended claims

### Amended claims in accordance with Rule 137(2) EPC.

**1.** An apparatus for a wireless communication network (100), the apparatus comprising:
a signaler (140) operable to signal, to a mobile terminal (130-0) associated to the wireless communication network (100), information (150; 200; 210; 300; 310) indicating that first physical radio resources assigned to the mobile terminal (130-0) for a communication between said mobile terminal (130-0) and the wireless communication network (100) are at least partially overlapping second physical radio resources assigned to at least one further interfering mobile terminal (130-1; 130-2; 130-3) for a communication between the at least one further interfering mobile terminal (130-1; 130-2; 130-3) and the wireless communication network (100).

**2.** The apparatus according to claim 1, wherein the mobile terminal (130-0) and the at least one further interfering mobile terminal (130-1; 130-2; 130-3) form a set (S) of mobile terminals, and wherein the signaled information (150; 200; 210; 300; 310) is indicative of the set (S) of mobile terminals (130-0; 130-1; 130-2; 130-3) and enables the mobile terminal (130-0) to decode downlink control information (200; 210; 300; 310) related to the set of mobile terminals (130-0; 130-1; 130-2; 130-3).

**3.** The apparatus according to claim 1, wherein the signaled information (150; 200; 210; 300; 310) is indicative of a first identifier, which is associated to the mobile terminal (130-0), and of at least one second identifier, which is associated to the at least one further interfering mobile terminal (130-1; 130-2; 130-3).

**4.** The apparatus according to claim 1, wherein the mobile terminal (130-0) and the at least one further interfering mobile terminal (130-1; 130-2; 130-3) form a set (S) of mobile terminals, wherein the signaler (140) is operable to signal a set-specific identifier of the set of mobile terminals (130-0; 130-1; 130-2; 130-3) and a user-specific identifier of the mobile terminal (130-0) as a part of the information (150).

**5.** The apparatus according to claim 4, wherein the signaler (140) is operable to scramble physical downlink control information for the set and or a Cyclic Redundancy Check derived thereof by means of the set-specific identifier.

**6.** The apparatus according to claim 1, wherein the information (150; 200; 300) is indicative of the first and/or the second first physical radio resources.

**7.** The apparatus according to claim 1, wherein the signaler (140) is operable to signal the information on commonly assigned physical radio resources to only one of the mobile terminal (130-0) and the at least one further interfering mobile terminal (130-1; 130-2; 130-3).

**8.** The apparatus according to claim 1, wherein the signaler (140) is operable to jointly signal information (150; 200; 300) on commonly assigned physical radio resources to all of the mobile terminal (130-0) and the at least one further interfering mobile terminal (130-1; 130-2; 130-3).

**9.** The apparatus according to claim 1, wherein the signaler (140) is operable to signal a common part (200; 300) of the information (150) to the mobile terminal (130-0) and to the at least one further interfering mobile terminal (130-1; 130-2; 130-3) via a downlink control channel, and wherein the signaler (140) is operable to signal a user-specific part (210; 310) of the information (150) to the mobile terminal (130-0) and/or to the at least one further interfering mobile terminal (130-1; 130-2; 130-3) via a downlink shared channel.

**10.** The apparatus according to claim 1, wherein the signaler (140) is operable to signal, along with the information (150; 200; 210; 300; 310), a user combination indicator (302) indicating a combination of mobile terminals from a group comprising the mobile terminal (130-0) and one or more further interfering mobile terminals (130-1; 130-2; 130-3), which are scheduled at the same time by the wireless communication network (100).

**11.** The apparatus according to claim 1, wherein the mobile terminal (130-0) is associated to a first cell of the wireless communication network (100) and the at least one further interfering mobile terminal (130-1; 130-2; 130-3) is associated to a second cell of the wireless communication network (100), and wherein the signaled information (150) comprises information enabling the mobile terminal (130-0) to read downlink control information of the second cell.

**12.** A mobile terminal apparatus (130) of a wireless communication network (100), the mobile terminal apparatus comprising:
a receiver (132) operable to receive, from the wireless communication network (100), information (150; 200; 210; 300; 310) indicating that first physical radio resources assigned to the mobile terminal (130) for a communication between said mobile terminal (130) and the wireless communication network (100) are at least partially overlapping second physical radio resources assigned to at least one further interfering mobile terminal for a communication between the at least one further interfering mobile terminal and the wireless communication network; and
a multiuser detector (134) operable to perform a multiuser detection based on the received information (150; 200; 210; 300; 310).

**13.** A method for a wireless communication network (100), the method comprising:
signaling, to a mobile terminal (130-0) associated to the wireless communication network (100), information (150; 200; 210; 300; 310) indicating that first physical radio resources assigned to the mobile terminal (130-0) for a communication between said mobile terminal (130-0) and the wireless communication network (100) are at least partially overlapping second physical radio resources assigned to at least one further interfering mobile terminal (130-1; 130-2; 130-3) for a communication between the at least one further interfering mobile terminal (130-1; 130-2; 130-3) and the wireless communication network (100).

**14.** A method for a mobile terminal apparatus (130) of a wireless communication network (100), the method comprising:
receiving, from the wireless communication network (100), information (150; 200; 210; 300; 310) indicating that first physical radio resources assigned to the mobile terminal (130) for a communication between said mobile terminal (130) and the wireless communication network (100) are at least partially overlapping second physical radio resources assigned to at least one further interfering mobile terminal for a communication between the at least one further interfering mobile terminal and the wireless communication network; and
performing a multiuser detection based on the received information (150; 200; 210; 300; 310).

**15.** Computer program having a program code for performing the method of claim 13 or 14, when the computer program is executed on a programmable hardware device.

**1.** An apparatus for a wireless communication network (100), the apparatus comprising:
a signaler (140) operable to signal, to a mobile terminal (130-0) associated to the wireless communication network (100), information (150; 200; 210; 300; 310) indicating that first physical radio resources assigned to the mobile terminal (130-0) for a communication between said mobile terminal (130-0) and the wireless communication network (100) are at least partially overlapping second physical radio resources assigned to at least one further mobile terminal (130-1; 130-2; 130-3) for a communication between the at least one further mobile terminal (130-1; 130-2; 130-3) and the wireless communication network (100).

**2.** The apparatus according to claim 1, wherein the mobile terminal (130-0) and the at least one further mobile terminal (130-1; 130-2; 130-3) form a set (S) of mobile terminals, and wherein the signaled information (150; 200; 210; 300; 310) is indicative of the set (S) of mobile terminals (130-0; 130-1; 130-2; 130-3) and enables the mobile terminal (130-0) to decode downlink control information (200; 210; 300; 310) related to the set of mobile terminals (130-0; 130-1; 130-2; 130-3).

**3.** The apparatus according to claim 1, wherein the signaled information (150; 200; 210; 300; 310) is indicative of a first identifier, which is associated to the mobile terminal (130-0), and of at least one second identifier, which is associated to the at least one further mobile terminal (130-1; 130-2; 130-3).

**4.** The apparatus according to claim 1, wherein the mobile terminal (130-0) and the at least one further mobile terminal (130-1; 130-2; 130-3) form a set (S) of mobile terminals, wherein the signaler (140) is operable to signal a set-specific identifier of the set of mobile terminals (130-0; 130-1; 130-2; 130-3) and a user-specific identifier of the mobile terminal (130-0) as a part of the information (150).

**5.** The apparatus according to claim 4, wherein the signaler (140) is operable to scramble physical downlink control information for the set and or a Cyclic Redundancy Check derived thereof by means of the set-specific identifier.

**6.** The apparatus according to claim 1, wherein the information (150; 200; 300) is indicative of the first and/or the second first physical radio resources.

**7.** The apparatus according to claim 1, wherein the signaler (140) is operable to signal the information on commonly assigned physical radio resources to only one of the mobile terminal (130-0) and the at least one further mobile terminal (130-1; 130-2; 130-3).

**8.** The apparatus according to claim 1, wherein the signaler (140) is operable to jointly signal information (150; 200; 300) on commonly assigned physical radio resources to all of the mobile terminal (130-0) and the at least one further mobile terminal (130-1; 130-2; 130-3).

**9.** The apparatus according to claim 1, wherein the signaler (140) is operable to signal a common part (200; 300) of the information (150) to the mobile terminal (130-0) and to the at least one further mobile terminal (130-1; 130-2; 130-3) via a downlink control channel, and wherein the signaler (140) is operable to signal a user-specific part (210; 310) of the information (150) to the mobile terminal (130-0) and/or to the at least one further mobile terminal (130-1; 130-2; 130-3) via a downlink shared channel.

**10.** The apparatus according to claim 1, wherein the signaler (140) is operable to signal, along with the information (150; 200; 210; 300; 310), a user combination indicator (302) indicating a combination of mobile terminals from a group comprising the mobile terminal (130-0) and one or more further interfering mobile terminals (130-1; 130-2; 130-3), which are scheduled at the same time by the wireless communication network (100).

**11.** The apparatus according to claim 1, wherein the mobile terminal (130-0) is associated to a first cell of the wireless communication network (100) and the at least one further mobile terminal (130-1; 130-2; 130-3) is associated to a second cell of the wireless communication network (100), and wherein the signaled information (150) comprises information enabling the mobile terminal (130-0) to read downlink control information of the second cell.

**12.** A mobile terminal apparatus (130) of a wireless communication network (100), the mobile terminal apparatus comprising:
a receiver (132) operable to receive, from the wireless communication network (100), information (150; 200; 210; 300; 310) indicating that first physical radio resources assigned to the mobile terminal (130) for a communication between said mobile terminal (130) and the wireless communication network (100) are at least partially overlapping second physical radio resources assigned to at least one further mobile terminal for a communication between the at least one further mobile terminal and the wireless communication network; and
a multiuser detector (134) operable to perform a multiuser detection based on the received information (150; 200; 210; 300; 310).

**13.** A method for a wireless communication network (100), the method comprising:
signaling, to a mobile terminal (130-0) associated to the wireless communication network (100), information (150; 200; 210; 300; 310) indicating that first physical radio resources assigned to the mobile terminal (130-0) for a communication between said mobile terminal (130-0) and the wireless communication network (100) are at least partially overlapping second physical radio resources assigned to at least one further mobile terminal (130-1; 130-2; 130-3) for a communication between the at least one further mobile terminal (130-1; 130-2; 130-3) and the wireless communication network (100).

**14.** A method for a mobile terminal apparatus (130) of a wireless communication network (100), the method comprising:
receiving, from the wireless communication network (100), information (150; 200; 210; 300; 310) indicating that first physical radio resources assigned to the mobile terminal (130) for a communication between said mobile terminal (130) and the wireless communication network (100) are at least partially overlapping second physical radio resources assigned to at least one further mobile terminal for a communication between the at least one further mobile terminal and the wireless communication network; and
performing a multiuser detection based on the received information (150; 200; 210; 300; 310).

**15.** Computer program having a program code for performing the method of claim 13 or 14, when the computer program is executed on a programmable hardware device.
